# EUROPEAN PATENT APPLICATION

(11) **EP 3 656 459 A1**
(43) Date of publication of application: **27.05.2020**
(21) Application number: 18835901.2
(22) Date of filing: 20.07.2018
(51) Int. Cl.: B01D 53/14

(54) **AQUEOUS COMPOSITION FOR THE SEPARATION OF CO2 AND/OR ACID GASES**

(30) Priority: 21.07.2017 ES 201730955
(71) Applicant: Universidad de Sevilla, 41013 Sevilla (ES)
(72) Inventor: VEGA BORRERO, Fernando, 41092 Sevilla (ES); NAVARRETE RUBIA,Benito, 41092 Sevilla (ES); CAMINO FERNÁNDEZ, José Antonio, 41092 Sevilla (ES); CANO PALACIOS, Mercedes, 41092 Sevilla (ES); CORTÉS GALEANO, Vicente Jesús, 41092 Sevilla (ES); CAMINO PEÑUELA, Sara, 41092 Sevilla (ES); GARRIDO LÓPEZ, Jaime, 41092 Sevilla (ES)
(74) Representative: Pons
(86) International application number: PCT/ES2018/000061
(87) International publication number: WO 2019/016418

(57) **Abstract**

The invention relates to an absorbent composition for capturing CO₂ or any other acid gas from a gas stream by means of regenerative chemical absorption based on an optimised adjustment of the cyclical working capacity of the absorbent.

## Description

The present invention relates to an aqueous composition and to its use in the separation of CO₂ and/or acid gases through a CO₂ separation system by means of a regenerative chemical absorption process based on an optimised adjustment of the cyclical working capacity of the absorbent and an optimised control of the operating conditions of the regenerator inlet streams, mainly in terms of temperature and distribution of feed flow rates to the equipment. Therefore, the present invention falls within the area of environmental technology and chemical processes. In particular, it is encompassed within the sector related to the capture of CO₂ and/or acid gases from stationary sources of emissions coming from industrial combustion facilities, but is applicable to other industrial processes requiring separation of CO₂ and/or acid gases from any process stream composed of a mixture of gases.

### BACKGROUND OF THE INVENTION

The process whereby acid gases are separated from a gas stream by means of regenerative chemical absorption has been used since the 1930s in numerous industrial processes, such as the treatment of synthesis gas. In recent years, these processes have sparked enormous interest on an industrial level as a result of the possibility of being used in the field of CO₂ capture and storage technologies (WO1995/021683 A1).

The general flow diagram of the CO₂ separation process by means of chemical absorption was patented by R. R. Bottoms (US1783901A). Said invention describes a system composed of an absorber, wherein the gases to be treated are put in contact, upstream, with an absorbent solution that separates the acid gases (CO₂, H₂S and SO₂) from the main stream by means of dissolution and chemical reaction, and a regenerator, wherein the operating conditions are opposed to those of the absorber, and wherein the acid compound is separated from the absorbent, becoming available for reincorporation into the absorption process. Various absorbents have been proposed for use in this process, most of which are compounds with an amine base: monoethanolamine (MEA), triethanolamine (TEA), methyldiethanolamine (MDEA), diisopropanolamine (DIPA) and diglycolamine (DGA) were the first compounds used in aqueous solution to selectively separate acid gases in process streams. These compounds had to be diluted in an aqueous solution because they caused major corrosion problems. As of the 1950s, different chemical companies such as Dow, BASF or UOP developed proprietary industrial formulations of absorbent mixtures which included, in addition to common absorbents, corrosion inhibitors, anti-foaming agents, buffers and promoters, which enhanced the operational capacities of these units thanks to a significant increase in absorbent concentrations in the aqueous solution. The main problems associated with the use of chemical absorbents for the separation of CO₂ consist of the high energy consumption associated with the regeneration of the absorbent, absorbent emissions and derivatives, due to their high volatility and/or flow of the gas phase, and in the degradation it suffers due to oxidative and thermal mechanisms that take place during the process of absorption of CO₂ and regeneration of the absorbent.

The application of CO₂ chemical absorption processes to separate it from the combustion gases arising from the combustion of fossil fuels and/or industrial processes requires the development of absorbent mixtures specifically formulated to operate under these operating conditions. These absorbent mixtures are aimed at optimising the features of traditional absorbents in terms of load capacity (mole of CO₂ per mole of absorbent), resistance to degradation, low volatility, fast kinetics and low CO₂ solubility enthalpy and can operate in an optimised manner in each case.

The application of chemical absorption in CO₂ capture processes has given rise to new absorbent formulations based on mixtures of primary/secondary amines with tertiary amines or salts such as potassium carbonate, such that they have intermediate functionality among their components, in addition to the use of sterically hindered amines that facilitate the release of the CO₂ absorbed by means of the formation of bonds weakened by the presence of large functional groups in the proximity of the amino groups. The use of amines with steric hindrance was initially proposed by Sartori et al. (US4112050A). There are numerous patents based on 2-amino-2-methyl-1-propanol, 2-methylaminoethanol, 2-ethylaminoethanol and 2-piperidine ethanol as a hindered amine (US6036931A). Other innovative absorbents are those called ionic liquids, amino acid salts with high melting points, high viscosity and low kinetics, currently under study at laboratory scale (Galan Sanchez, L. M., G Meindersma, A Dehaan. 2007, Chemical Engineering Research and Design 85: 31-39).

The use of piperazine (PZ) mixtures and derivatives with different types of absorbents with slow absorption kinetics is also proposed. The use of PZ as an absorbent (CA2651265A1) has been proposed mainly as a promoter of mixtures of absorbents with slow kinetics such as piperazine and monodiethanolamine (MDEA) (US2009/0211446A1), piperazine and potassium carbonate (US4581209A), piperazine and alcohols (US8388855B2). They all showed excellent results in comparison with 30 % w/w MEA, addressing in turn the problems associated with piperazine solubility problems in aqueous solution.

Furthermore, in recent years numerous configurations of the basic process have been developed with the aim of optimising the global CO₂ separation process and, in particular, significantly reducing energy consumption mainly associated with the regeneration of the absorbent. Different variants of the traditional setup of the absorber (US8192530B2) and modifications to the regenerator have been proposed, such as, for example, harnessing energy from the sensible heat of the regenerator outlet stream (US4798910A), preheating the condensates at the regenerator inlet (WO2007/107004A1), partially evaporating the lean amine at the regenerator outlet so as to minimise total energy input to the reboiler of the regeneration unit (WO2008/063079A2), pressurisation of the upper section of the regenerator to lower the water/CO₂ ratio in the stripping stream of the regeneration unit (WO2008/063082A2). Many of these modifications have led to major energy reductions in the regeneration of the absorbent compared with the traditional setup.

The appearance of new configurations of the process of separating CO₂ and/or acid gases requires the use of specifically designed absorbents which allow a wide operating range and the maximisation of the features of each of the new technologies. In this way, a major reduction in energy consumption associated with the global CO₂ capture process can be achieved.

Therefore, it would be desirable to have an absorbent system capable of separating CO₂ and/or acid gases from a gas stream that minimises the energy requirements of the absorbent regeneration process.

### DESCRIPTION OF THE INVENTION

In a first aspect, the present invention relates to an aqueous composition for absorbing CO₂ and/or acid gases comprising:
i. a cyclical diamine structure of formula (I): 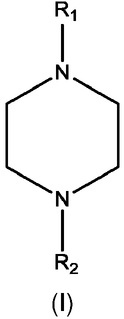 wherein:
   R₁ is a C₁₋₄ alkyl group substituted by a -NH₂ group; and
   R₂ is H or a C₁₋₄ alkyl group optionally substituted by a -NH₂ group;
ii. an amine of formula (II): 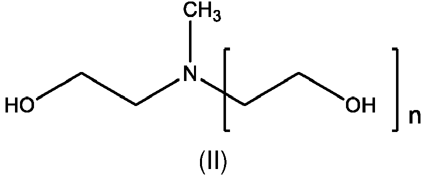 wherein:
   n represents from 0 to 10;
iii. a primary amine of linear or branched structure, a secondary amine of linear, branched or cyclical structure; or a cyclical amine of formula (III): 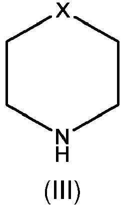 wherein:
   X represents H, -NR₃ or -CR₄R₅; and
   each R₃, R₄ and R₅ independently represent H or C₁₋₄ alkyl; and
iv. water.

The component (i) of the defined composition acts as a CO₂ load capacity support.

The component (ii) of the defined composition that reduces the global CO₂ absorption heat of the system and, therefore, reduces the heat required to regenerate the absorbent.

The component (iii) of the defined composition is a promoter that increases the kinetics of the CO₂ absorption process.

In another embodiment, the invention relates to the previously defined composition, wherein R₂ is H or a C₁₋₄ alkyl group, and preferably wherein R₂ is H.

In another embodiment, the invention relates to the previously defined composition, wherein (i) is 1-(2-aminoethyl)-piperazine.

In another embodiment, the invention relates to the previously defined composition, wherein (ii) is methyldiethanolamine.

In another embodiment, the invention relates to the previously defined composition, wherein (iii) is a cyclical amine of formula (III).

In another embodiment, the invention relates to the previously defined composition, wherein (iii) is a cyclical amine of formula (III) wherein:
X represents -NR₃ or -CR₄R₅; and
each R₃, R₄ and R₅ independently represent H or C₁₋₄ alkyl.

In another embodiment, the invention relates to the previously defined composition, wherein (iii) is a cyclical amine of formula (III) wherein:
X represents -NR₃; and
R₃ represents H or C₁₋₄ alkyl.

In another embodiment, the invention relates to the previously defined composition, wherein (iii) is a cyclical amine of formula (III) wherein:
X represents -CR₄R₅; and
c represents H or C₁₋₄ alkyl.

In another embodiment, the invention relates to the previously defined composition, wherein (iii) is a cyclical amine of formula (III) wherein:
X represents H; and
each R₃, R₄ and R₅ independently represent H or C₁₋₄ alkyl.

In another embodiment, the invention relates to the previously defined composition, wherein (iii) is piperidine or monomethylamine.

In another embodiment, the invention relates to the previously defined composition, wherein:
(i) is a compound of formula (I), and preferably 1-(2-aminoethyl)-piperazine;
(ii) is an amine of formula (II), and preferably methyldiethanolamine; and
iii. is a primary amine of linear or branched structure, a secondary amine of linear, branched or cyclical structure or a cyclical amine of formula (III), and preferably piperidine or monomethylamine.

In another embodiment, the invention relates to the previously defined composition, wherein (i) is in a concentration of at least 5 % w/w in solution, preferably in a concentration between 10 % w/w and 50 % w/w in solution, and more preferably in a concentration of 25 % w/w in solution.

In another embodiment, the invention relates to the previously defined composition, wherein (ii) is in a concentration of at least 1 % w/w in solution, preferably in a concentration between 3 % w/w and 30 % w/w in solution, and more preferably in a concentration of 5 % w/w in solution.

In another embodiment, the invention relates to the previously defined composition, wherein (iii) is in a concentration of at least 0.01 % w/w in solution, preferably in a concentration between 1 % w/w and 15 % w/w in solution, and more preferably in a concentration of 5 % w/w in solution.

In another embodiment, the invention relates to the previously defined composition, wherein:
(i) is a compound of formula (I), and preferably 1-(2-aminoethyl)-piperazine, wherein (i) is in a concentration of at least 5 % w/w in solution, preferably in a concentration between 10 % w/w and 50 % w/w in solution, and more preferably in a concentration of 25 % w/w in solution;
(ii) is a compound of formula (II), and preferably methyldiethanolamine, wherein (ii) is in a concentration of at least 1 % w/w in solution, preferably in a concentration between 3 % w/w and 30 % w/w in solution, and more preferably in a concentration of 5 % w/w in solution; and
(iii) is a primary amine of linear or branched structure, a secondary amine of linear, branched or cyclical structure or a cyclical amine of formula (III), and preferably monomethylamine or piperidine, wherein (iii) is in a concentration of at least 0.01 % w/w in solution, preferably in a concentration between 1 % w/w and 15 % w/w in solution, and more preferably in a concentration of 5 % w/w in solution.

In another embodiment, the invention relates to the previously defined composition, which further comprises one or more coadjuvant agents, anti-foaming agents, corrosion inhibitors, oxidative degradation inhibitors and mixtures thereof.

The amount of coadjuvant agents, anti-foaming agents, corrosion inhibitors and oxidative degradation inhibitors in the composition of the invention will be adequate for a person skilled in the art for the proper functionality and operability of the absorbent in a process of separating CO₂ and/or acid gases by means of chemical absorption based on an optimised adjustment of the cyclical working capacity of the absorbent and an optimised control of the operating conditions of the regenerator inlet streams, mainly in terms of temperature and distribution of feed flow rates to the equipment.

Examples of these additives can be selected from, but not limited to, arsenious anhydride, selenium or tellurium acids, protides, amino acids, such as glycine, vanadium oxides or chromates, inter alia. All these additives can be found in the composition in adequate amounts for the proper functionality and operability of the absorbent in a CO₂ separation process by means of the chemical absorption described in the present invention, amounts known to a person skilled in the art.

Another aspect of the invention relates to the use of the previously defined composition for absorbing acid gases, and preferably wherein the acid gases comprise CO₂.

Another aspect of the invention relates to the use of the previously defined composition for absorbing acid gases by means of a CO₂ separation system by means of chemical absorption based on an optimised adjustment of the cyclical working capacity of the absorbent, and preferably wherein the acid gases comprise CO₂.

The CO₂ separation system by means of chemical absorption is based on an optimised adjustment of the cyclical working capacity of the absorbent and an optimised control of the operating conditions of the regenerator inlet streams, mainly in terms of temperature and distribution of feed flow rates to the equipment.

Throughout the invention, the term "primary amine" makes reference to a compound which comprises the -NH₃ group, wherein one of the hydrogen atoms of the group is substituted by another group, such as, for example, C₁₋₄ alkyl (primary alkanolamine). The primary amines of the invention may be linear or branched. Examples include, inter alia, monoethanolamine, methylamine, ethylamine, 2-methylpropylamine, propylamine and butylamine.

"Secondary amine" makes reference to a compound which comprises the -NH₃ group, wherein two of the hydrogen atoms of the group are substituted by another group, such as, for example, C₁₋₄ alkyl (secondary alkanolamine). The secondary amines of the invention may be linear, branched or cyclical. Examples include, inter alia, diethanolamine, dimethylamine, diglycoamine, diethylamine, methylethylamine, 1-butyl-1-(2-methylpropyl)amine, piperidine, piperazine and 1-(2-aminoethyl)-piperazine.

"Tertiary amine" makes reference to a compound which comprises the - NH₃ group, wherein the three hydrogen atoms of the group are substituted by another group, such as, for example, C₁₋₄ alkyl (tertiary alkanolamine). The tertiary amines of the invention may be linear, branched or cyclical. Examples include triethanolamine, methyldiethanolamine.

"Polyamine" makes reference to a compound containing two or more -NH₃ groups, wherein one of the hydrogen atoms of the group is substituted by another group, such as, for example, C₁₋₄ alkyl. The polyamines of this invention may be linear, branched or cyclical. Examples include isoforondiamine and tetramethylethylenediamine.

"Alkaline salt", define and incorporate potassium carbonate, calcium carbonate, sodium carbonate as an example.

"C₁₋₄ alkyl" means as a group or part of a group, means an alkyl group with a linear or branched chain containing one to four C atoms and includes the methyl, ethyl, propyl, isopropyl, butyl, isobutyl, sec-butyl and terc-butyl groups.

In the present invention, "acid gas" makes reference to any of the following: CO₂, H₂S and SO₂, or mixtures thereof, preferably the acid gas to be separated in the method of the present invention is CO₂.

The application of this method for capturing CO₂ may be for gases or gas streams from stationary combustion sources, such as electricity production systems, cement plants, oil refineries or the iron and steel industry, and can also be applied to a gas stream from any industrial process requiring the separation of CO₂ and/or acid gases, such as for example synthesis gas production. The process of separating CO₂ in a gas stream under these conditions is highly favoured when the CO₂ has a high concentration of CO₂.

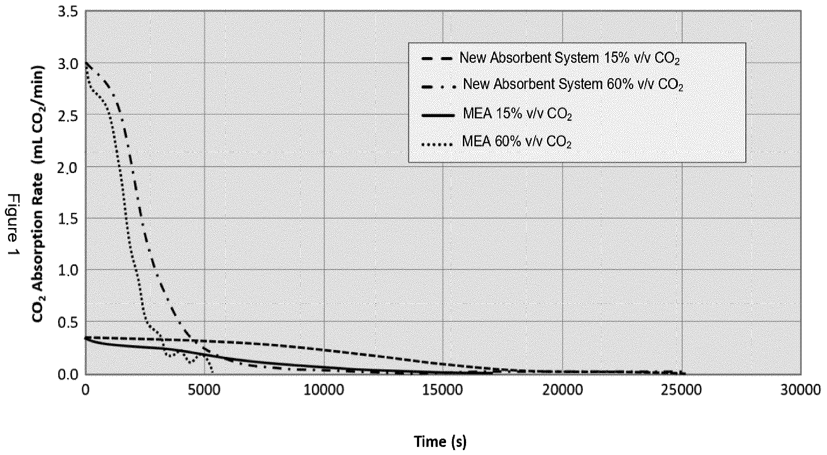

Therefore, the present invention provides a new absorbent composition formulated to capture CO₂ and/or an acid gas from a gas stream by means of regenerative chemical absorption, and particularly by means of regenerative chemical absorption operated in an alternative configuration to that of the traditional system for separating CO₂ from a gas stream by means of chemical absorption, based on the optimisation of the cyclical operating capacity of the absorbent used by means of a particular arrangement of the streams involved in the CO₂ absorption-desorption process and a very thorough control of the operating conditions of the regenerator inlet streams, mainly in terms of temperature and distribution of feed flow rates to the equipment. This method of separating CO₂ and/or acid gases based on regenerative chemical absorption is described in Spanish patent application P201600519, "Method and system for the separation of CO₂ based on chemical absorption" (see Example 1 and Figures 1 to 3), which may comprise the following steps:
a) absorbing CO₂ from a gas stream to be treated at a temperature lower than 60 °C and a pressure comprised in the range of 1 to 1.5 bar, by putting said stream in an absorber in contact with an absorbent solution in which the CO₂ will be retained;
b) recirculating up to 75 % of the stream comprising the CO₂-rich absorbent solution from step a) to the lower bed of the absorption system. Operating under these conditions makes it possible to adjust the cyclical working capacity range of the absorbent during operation in an optimised manner;
c) desorbing the CO₂ in a regenerator from the stream comprising the CO₂-rich absorbent solution from step a) not recirculated to step b) at a temperature between 80 °C and 120 °C, a pressure between 1.5 and 5 bar and a steam stripping flow rate between 10 % and 90 % by volume with respect to the desorbed CO₂ flow rate, wherein said stream is divided into at least two streams by means of a set of heat exchangers, prior to flowing into the regenerator;
d) recovering the absorbent solution resulting from step c) to the absorber of step a).

Based on this basic configuration, the method firstly proposes incorporating a recirculation line directed to the absorber that constitutes a diversion of the outflow of the CO₂-rich absorbent solution, which is partially redirected to the absorber for the purpose of optimising the CO₂ absorption capacity of the absorbent used. Secondly, the method incorporates a particular set of heat exchangers which, besides thermally conditioning the CO₂-rich solution, divides it into at least two streams which are introduced in the regenerator in areas located at different heights, stratifying the feed into the regenerator, which decreases the regenerator temperature profile.

This chemical absorption process enables the effective operation of the regenerator at a thermal level below those proposed in traditional operating modes, thereby significantly reducing energy consumption associated with the regeneration of the absorbent. As a result, it is possible to work with a higher load or concentration of CO₂ in the regenerated absorbent and, thus, shift the cyclical operating capacity thereof to areas where the energy consumption associated with CO₂ desorption is lower. The decrease obtained in the temperature profile of the regenerator reduces the degradation rate of the absorbent associated with thermal mechanisms.

The mixture of absorbents is aimed at optimising the features of this configuration due to its higher load capacity, such as to enable a better adjustment of operating conditions and, therefore, the need for a slower absorbent flow rate and lower energy consumption associated with the global capture process.

The absorbent composition of the present invention is characterised in that it has a high load capacity and operating flexibility that maximises the features of the absorption-desorption process with a major reduction in energy consumption compared to a same operation of the CO₂ capture unit using 30 % w/w monoethanolamine as an absorbent (30 % w/w MEA, reference absorbent).

The method for separating acid gases, particularly CO₂, by means of chemical absorption is based on an optimisation of the cyclical operating load capacity of the absorbent, understood as the difference between the CO₂ load of the rich absorbent composition at the outlet of the absorber and the lean absorbent composition at the outlet of the regenerator, such as to minimise the energy requirements in the reboiler associated with the absorbent regeneration process.

The shift in cyclical CO₂ load capacity of the absorbent in operation enables operation in a region with less CO₂ solubility enthalpy, thereby obtaining a reduction in energy consumption in the regenerator in comparison with a conventional operation. Optimisation of cyclical load capacity is carried out by adjusting the degree of regeneration required by the absorbent. This adjustment is achieved by introducing the stream of CO₂-rich absorbent composition obtained at the outlet of the absorber at different heights of the regenerator and/or by adjusting the temperature of the CO₂-rich absorbent composition streams at the inlet of the regenerator.

This configuration of the CO₂ regenerative absorption process concludes with the re-introduction of CO₂-lean stream as it flows out of the regenerator in the absorber, to once again produce the absorption of CO₂ and/or acid gases, which are retained in the absorbent. In order to produce an increase in the CO₂ load of the absorbent during the absorption process, part of the CO₂-loaded stream that flows out of the absorber is partially recirculated after being previously cooled. This makes it possible to increase the global CO₂ load of the absorbent that flows out of the absorber. Operating under these conditions makes it possible to adjust the cyclical working capacity range of the absorbent during operation in an optimised manner. Thus, this method has enabled a significant reduction in the specific consumption associated with the regeneration of the absorbent compared to a conventional configuration of the absorption system.

Therefore, another aspect of the present invention relates to a method for separating acid gases from a gas stream based on chemical absorption, comprising the following steps:
a) absorbing the acid gases from the gas stream to be treated at a temperature between 40 °C and 60 °C and a pressure in a range between 1 and 1.5 bar, by putting said stream in an absorber in contact with an absorbent solution wherein the acid gases will be retained, wherein the absorbent solution is an absorbent composition of the present invention;
b) recirculating up to 75 % of the stream comprising the acid gas-rich absorbent solution from step (a) to the absorber;
c) desorption of the acid gas in a regenerator of the stream comprising the acid gas-rich absorbent solution, preferably CO₂, from step (a) not recirculated to step (b) at a temperature between 80 °C and 120 °C, a pressure between 1.5 and 5 bar and a steam flow rate between 10 % and 90 % by volume with respect to the desorbed acid gas flow rate, wherein said stream is divided into at least two streams by means of a set of heat exchangers, prior to flowing into the regenerator; and
d) recovering the absorbent solution resulting from step (c) to the absorber of step (a).

In a preferred embodiment of the method of the invention, the acid gas of the gas stream to be treated in step (a) is transferred to the liquid phase, where it dissolves and chemically bonds to the absorbent.

In a preferred embodiment of the method of the invention, the recirculated flow rate of step (b) represents between 25 % and 75 % of the total acid gas-rich solution from step (a).

In a preferred embodiment of the method of the invention, the recirculation of the stream coming from step (b) takes place in the lower bed of the absorber of step (a).

In a preferred embodiment of the method of the invention, the streams from step (c) are introduced in areas located at different heights of the regenerator of step (d).

In a preferred embodiment of the method of the invention, a set of heat exchangers is incorporated prior to step (c), wherethrough the stream comprising the acid gas-rich absorbent solution, preferably CO₂, from step (a) not recirculated in step (b), is introduced. Besides thermally conditioning the CO₂-rich absorbent solution, this set of heat exchangers divides it into at least two streams which are introduced in the regenerator in areas located at different heights, stratifying the feed into the regenerator, which decreases the regenerator temperature profile.

The absorbent composition of the present invention adapts to this method of separating CO₂ and/or acid gases from a gas stream. The improvement in the features of the process after the use of the absorbent composition described in this invention is based on the following features, which have been corroborated by the examples:
a) High CO₂ load capacity, expressed as moles of CO₂ per mole of absorbent in aqueous solution: This feature confers better adaptation to the operating conditions imposed by the described method.
b) High kinetic CO₂ absorption ratios, expressed as mass flow rate of CO₂ per unit of time, which leads to a reduction in the absorbent flow rate required to achieve a given CO₂ separation yield and, therefore, a reduction in investment, due to the smaller size of the equipment and lines of the CO₂ separation unit.
c) Both of the previously described features entail a need for a smaller L/G ratio in operation to achieve a given CO₂ separation yield. This implies less circulation of liquid absorbent solution and, therefore, lower consumption associated with the impulsion of the absorbent.
d) The use of the absorbent composition described in this invention in the method of the invention enables a significant reduction in the energy consumption associated with the regeneration of the absorbent.

Throughout the description and the claims, the word "comprises" and its variants do not intend to exclude other technical features, additives, components or steps. For persons skilled in the art, other objects, advantages and features of the invention may be partly inferred from the description and partly from the embodiment of the invention. The following examples and figures are provided for illustrative purposes and are not intended to limit the present invention.

### BRIEF DESCRIPTION OF THE FIGURES

**FIG. 1****. Shows the evolution in CO₂ absorption ratios obtained during laboratory assays**
   The CO₂ absorption ratio is shown in accordance with the experimental time after executing each assay, expressed as ml of CO₂ absorbed per minute (ml CO₂/min). The assays carried out on the new absorbent system are represented using 60 % v/v CO₂ (yellow) and 15 % v/v CO₂ (blue) in the gas phase. In the case of MEA, the absorption ratios obtained for 60 % v/v CO₂ (red) and 15 % v/v CO₂ (green) in the gas phase are represented.

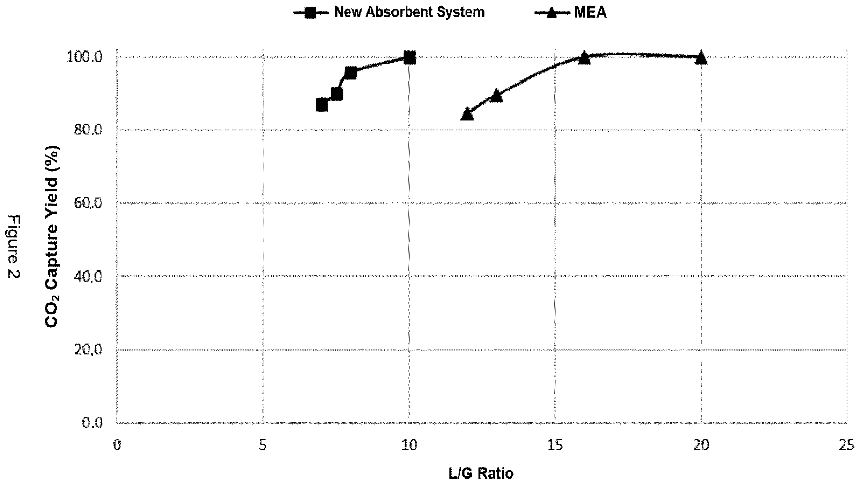

**FIG. 2****. Shows the CO₂ capture yield obtained for each L/G ratio using the new absorbent system** (■) **and the reference absorbent** (▲)
   The CO₂ capture yield is represented, defined as the difference in mass flow rate of CO₂ in the gas phase between outflow and inflow in the CO₂ absorption unit. The capture yield percentage is expressed on the basis of CO₂ mass flow rate into the absorption unit. This parameter has been represented in accordance with the L/G ratio of each assay, expressed as mass flow rate of absorbent in the liquid phase (kg/h) with respect to mass flow rate of gas to be treated (kg/h). The assays carried out using the new absorbent system are represented by (■), while the assays carried out using MEA are represented by **(▲).**

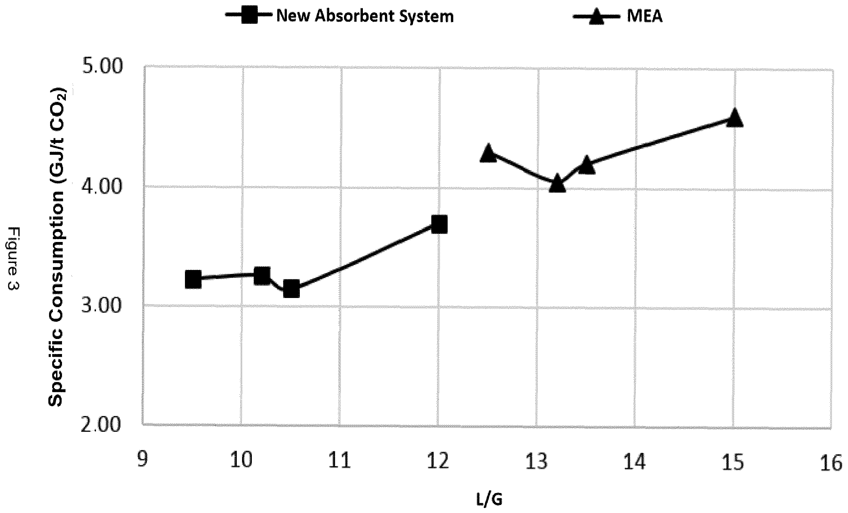

**FIG. 3****. Shows the specific consumption associated with the regeneration of the absorbent obtained for each L/G ratio using the new absorbent system (■) and the reference absorbent (▲)**
   The specific consumption associated with the regeneration of the absorbent is represented, expressed in units of energy per unit mass of CO₂ (GJ/t CO₂). This parameter has been represented in accordance with the L/G ratio of each assay, expressed as mass flow rate of absorbent in the liquid phase (kg/h) with respect to mass flow rate of gas to be treated (kg/h). The assays carried out using the new absorbent system are represented by **(■),** while the assays carried out using MEA are represented by **(▲)**.

### EXAMPLES

The invention is illustrated below by means of tests conducted by the inventors, which demonstrate the effectiveness of the product of the invention.

### Example 1:

Different assays were carried out in a laboratory set-up operating in semi-continuous regime to produce the saturation of a known amount of absorbent solution. To this end, 250 ml of absorbent solution were placed in a reactor wherein 2 L/min of a gas stream of a known composition were introduced to saturation. The assay temperature was established at 50 °C. After completing the assay, the equilibrium load of the absorbent was determined, expressed as moles of CO₂ per mole of absorbent, using an inorganic carbon analyser. Table 1 shows the results obtained for the assays carried out using the absorbent system described in this invention and its comparison with the reference absorbent (aqueous solution of 30 % w/w MEA).

**Table 1. Summary of the equilibrium load of absorbent in different concentrations of CO₂ in the gas phase**

| **Absorbent** | **Assay at 15 % v/v CO₂** | **Assay at 60 % v/v CO₂** |
|---|---|---|
| Absorbent system of the invention | 0.908 | 1.020 |
| 30 % w/w MEA | 0.535 | 0.599 |

The new absorbent system allows up to 70 % more CO₂ load capacity in comparison with the reference absorbent. Thus, the new absorbent system has greater operating flexibility and adaptability to the new CO₂ separation system based on an optimised adjustment of the cyclical working capacity of the absorbent and an optimised control of the operating conditions of the regenerator inlet streams.

### Example 2:

Based on the assays described in example 1, it was possible to determine the absorption ratios measured in the gas phase for each of the assays carried out. Figure 1 summarises the results obtained in these assays and represents the evolution of the CO₂ absorption ratios obtained in the laboratory assays.

The absorption ratios increase significantly with an increase in concentration of CO₂ in the gas phase. Additionally, the new absorbent system has higher CO₂ absorption ratios than those obtained with the reference absorbent (aqueous solution of 30 % w/w MEA) for a same concentration of CO₂ in the gas phase, demonstrating improved kinetic behaviour in operation according to the new CO₂ separation system based on an optimised adjustment of the cyclical working capacity of the absorbent and an optimised control of the operating conditions of the regenerator inlet streams.

### Example 3:

A process was carried out whereby CO₂ was separated from a synthetic gas stream in a unit at laboratory scale based on an operation according to the new CO₂ separation system, based on an optimised adjustment of the cyclical working capacity of the absorbent and an optimised control of the operating conditions of the regenerator inlet streams, using the new absorbent system proposed in this invention and 30 % w/w MEA as the reference absorbent. In the example of embodiment, a synthetic gas flow rate of 7 L/min, with a composition of 60 % v/v CO₂, saturated in water and balanced with N₂ was used. The total amount of absorbent used in the system was 2 L. The absorption of CO₂ was performed at a pressure of 1 atm and at a temperature of 50 °C in a column 3 cm in diameter and 2 m in height, using 6 mm ceramic Raschig rings.

The regeneration of the absorbent took place at a pressure of 2 bar in a column 3 cm in diameter and 1 m in height using 6 mm stainless steel 316L Raschig rings. The average operating temperature in the regeneration unit was 118 °C for the 30 % w/w MEA assays and 117 °C for the assays of the new absorbent system proposed, operating according to the new CO₂ separation system. The L/G ratio was varied for each absorbent until reaching a capture yield of 100 %. Figure 2 shows the CO₂ capture yields obtained in accordance with the L/G ratio used in each assay.

The assays carried out showed the greater absorption capacity and operating flexibility of the new absorbent system operating according to the new CO₂ separation system with respect to the reference absorbent. The L/G ratios obtained are lower than those required by the reference absorbent for a defined CO₂ capture yield. In particular, the new absorbent system requires a L/G ratio of 8, while the 30 % w/w MEA requires a L/G ratio of 13 in the case of obtaining a CO₂ capture yield of 90 %.

### Example 4:

Based on the assays described in the previous example, the specific consumptions associated with the regeneration of the absorbent were obtained for each assay carried out, modifying the L/G ratio. Figure 3 represents the evolution of this parameter for each assay carried out, using the two previously indicated absorbents.

As shown by the results indicated in Figure 3 and in Table 2 (summary), the new absorbent system provides lower energy consumption associated with the regeneration of the absorbent in an operation according to the new CO₂ separation system. The new absorbent system reduces energy consumption by up to 22 % in comparison with the reference absorbent.

**Table 2. Summary of energy consumptions and capture yields associated therewith obtained in an operation according to the new CO₂ separation system:**

| **Absorbent** | **L/G ratio** | **Specific consumption (GJ/t CO₂)** | **Capture yield (%)** |
|---|---|---|---|
| Absorbent system of the invention | 10.5 | 3.15 | 97.2 |
| 30% w/w MEA | 13.2 | 4.05 | 96.2 |

## Claims

1. An aqueous composition for absorbing CO₂ and/or acid gases comprising:
i. a cyclical diamine structure of formula (I): 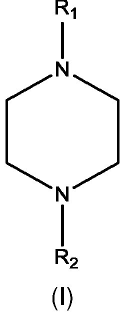 wherein:
R₁ is a C₁₋₄ alkyl group substituted by a -NH₂ group; and
R₂ is H or a C₁₋₄ alkyl group optionally substituted by a -NH₂ group;
ii. an amine of formula (II): 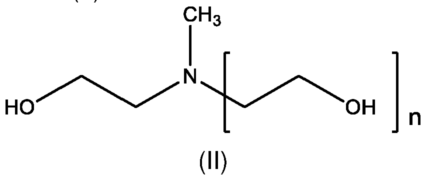 wherein:
n represents from 0 to 10;
iii. a primary amine of linear or branched structure, a secondary amine of linear, branched or cyclical structure; or a cyclical amine of formula (III): 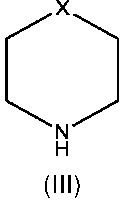 wherein:
X represents H, -NR₃ or -CR₄R₅; and
each R₃, R₄ and Rs independently represent H or C₁₋₄ alkyl; and
iv. water.

2. The composition, according to claim 1, wherein the component (i) is a cyclical diamine structure of formula (I) wherein R₂ is H or a C₁₋₄ alkyl group.

3. The composition, according to any of claims 1 or 2, wherein (i) is 1-(2-aminoethyl)-piperazine.

4. The composition, according to claim 3, wherein (ii) is methyldiethanolamine.

5. The composition, according to any of claims 1 to 4, wherein (iii) is monomethylamine.

6. The composition, according to any of claims 1 to 4, wherein (iii) is a compound of formula (III).

7. The composition, according to claim 6, wherein (iii) is piperidine.

8. The composition, according to any of claims 1 to 7, wherein (i) is in a concentration of at least 5 % w/w in solution.

9. The composition, according to claim 8, wherein (i) is in a concentration between 10 % w/w and 50 % w/w in solution.

10. The composition, according to any of claims 8 or 9, wherein (i) is in a concentration of 25 % w/w in solution.

11. The composition, according to any of claims 1 to 10, wherein (ii) is in a concentration of at least 1 % w/w in solution.

12. The composition, according to claim 11, wherein (ii) is in a concentration between 3 % w/w and 30 % w/w in solution.

13. The composition, according to any of claims 11 or 12, wherein (ii) is in a concentration of 5 % w/w in solution.

14. The composition, according to any of claims 1 to 13, wherein (iii) is in a concentration of at least 0.01 % w/w in solution.

15. The composition, according to claim 14, wherein (iii) is in a concentration between 1 % w/w and 15 % w/w in solution.

16. The composition, according to any of claims 14 or 15, wherein (iii) is in a concentration of 5 % w/w in solution.

17. The composition, according to any of claims 1 to 16, which further comprises one or more coadjuvant agents, anti-foaming agents, corrosion inhibitors, oxidative degradation inhibitors and mixtures thereof.

18. Use of the composition, according to any of claims 1 to 17, for absorbing acid gases by means of a CO₂ separation system by means of chemical absorption based on an optimised adjustment of the cyclical working capacity of the absorbent and an optimised control of the operating conditions of the regenerator inlet streams, mainly in terms of temperature and distribution of feed flow rates to the equipment.

19. The use, according to claim 18, wherein the acid gases comprise CO₂.
